(19) **Europäisches Patentamt**
**European Patent Office**
**Office européen des brevets**

(11) Veröffentlichungsnummer : **0 430 954 B1**

(12) **EUROPÄISCHE PATENTSCHRIFT**

(45) Veröffentlichungstag der Patentschrift :
**06.05.92 Patentblatt 92/19**

(51) Int. Cl.$^5$ : **B62D 6/02**

(21) Anmeldenummer : **89907701.0**

(22) Anmeldetag : **03.07.89**

(86) Internationale Anmeldenummer :
**PCT/EP89/00755**

(87) Internationale Veröffentlichungsnummer :
**WO 90/00130 11.01.90 Gazette 90/02**

(54) VORRICHTUNG ZUR ERZEUGUNG EINER VORZUGSWEISE STEUERBAREN AXIALEN GEGENKRAFT AN EINER DURCH EINE AXIALKRAFT AXIALVERSCHIEBBAREN ROTIERENDEN WELLE.

(30) Priorität : **01.07.88 DE 3822219**

(43) Veröffentlichungstag der Anmeldung :
**12.06.91 Patentblatt 91/24**

(45) Bekanntmachung des Hinweises auf die
Patenterteilung :
**06.05.92 Patentblatt 92/19**

(84) Benannte Vertragsstaaten :
**DE FR IT**

(56) Entgegenhaltungen :
**DE-A- 3 612 619**
**FR-A- 2 216 162**
**GB-A- 2 186 245**

(73) Patentinhaber : **VOLKSWAGEN**
**AKTIENGESELLSCHAFT**
**W-3180 Wolfsburg (DE)**

(72) Erfinder : **NIKL, Horst**
**J.-F. Kennedy-Allee 70**
**W-3180 Wolfsburg 1 (DE)**
Erfinder : **WEISSBRICH, Alfons**
**Paul-Jonas-Meier-Str. 26**
**W-3300 Braunschweig (DE)**

## Beschreibung

Die Erfindung betrifft eine Vorrichtung zur Erzeugung einer vorzugsweise steuerbaren axialen Gegenkraft an einer durch eine Axialkraft axial verschiebbaren rotierenden Welle der im Oberbegriff des Patentanspruchs 1 genannten Art.

Derartige Vorrichtungen werden beispielsweise im Rahmen einer vollelektrischen Servolenkeinrichtung für Kraftfahrzeuge benötigt, um die Servounterstützung in Abhängigkeit von geeigneten Betriebsparametern des Fahrzeuges steuern zu können.

Generell können sie jedoch auf den verschiedensten technischen Gebieten überall dort eingesetzt werden, wo an einer rotatorisch und durch Axialkräfte axial beweglichen Welle bei begrenztem Axialweg definiert diesen Axialkräften entgegengerichtete axiale Gegenkräfte zur Wirkung gebracht werden sollen, um dadurch z. B. definierte Ansprech- oder Steuerschwellen für von der Welle durchzuführende Steuer- bzw. Regelschritte zu erzeugen.

Eine im Rahmen einer vollelektrischen Servolenkeinrichtung für Kraftfahrzeuge eingesetzte Vorrichtung dieser Art ist beispielsweise aus der DE-OS 36 12 619, Fig. 5 bekannt.

Bei dieser bekannten Vorrichtung ist ein durch eine, vorzugsweise steuerbare, Radialkraft beaufschlagtes Rastglied in Form eines Steuerstiftes vorgesehen, welches radial in eine umlaufende Wellenringnut mit vom Nutengrund aus stetig ansteigenden Nutflanken eingreift, wodurch an der Wellenringnut eine u. a. von der Höhe der aufgebrachten Radialkraft und von der Form der Nutenflanken abhängige axiale Kraft erzeugt wird, welche der die Welle axial verschiebenden Axialkraft entgegengerichtet ist.

Da der axiale Verschiebeweg der Welle, entlang dem das Rastglied steuernd zur Wirkung gebracht werden kann, nur gering ist, müssen vergleichsweise hohe radiale Kräfte aufgebracht werden.

Der Erfindung liegt nun die Aufgabe zugrunde, eine Vorrichtung der im Oberbegriff des Patentanspruchs 1 genannten Art weiter zu verbessern, insbesondere bezüglich ihrer Steuerpräzision.

Diese Aufgabe wird erfindungsgemäß durch die Merkmale des Patentanpruchs 1 gelöst. Vorteilhafte Ausgestaltungen und Weiterbildungen der Erfindung sind in den Unteransprüchen angegeben.

Erfindungsgemäß ist also auf der Welle ein axialspielfreies Rillenkugellager befestigt, dessen Lageraußenring eine radiale Vertiefung mit schrägen Flanken aufweist, in die das freie Ende des radialkraftbeaufschlagten Rastgliedes eingreift. Vorzugsweise trägt das freie Ende des Rastgliedes dabei einen quer zur Wellenlängsachse ausgerichteten drehbaren Rollenkörper, der in die dann als quer zur Wellenachse verlaufende Nut ausgebildete radiale Vertiefung des Lageraußenringes eingreift.

Mit der erfindungsgemäßen Vorrichtung ist es möglich, an der rotierenden Welle mit hoher Präzision definierte axiale Steuer-(Gegen-)Kräfte zur Wirkung zu bringen, und zwar über eine sehr lange Betriebszeit, weil trotz der vergleichsweise großen einwirkenden Radialkräfte dabei kaum Verschleiß auftritt.

Eine wegen ihrer besonders kompakten und bauraumsparenden Bauweise für den Einsatz in vollelektrischen Servolenkeinrichtungen von Kraftfahrzeugen besonders geeignete Ausgestaltung und Weiterbildung der erfindungsgemäßen Vorrichtung zeichnet sich dadurch aus, daß die Kugellaufbahn des Rillenkugellagers unmittelbar in die Welle eingearbeitet ist und die Welle selbst als Lagerinnenring des Rillenkugellagers dient, wobei vorzugsweise ein geteilter Lageraußenring Verwendung findet, dessen Trennfuge in einer etwa senkrecht zur Radialkraft verlaufenden Ebene und etwa in Höhe der Wellenmittelachse verläuft.

Anhand einiger in der Zeichnung dargestellter Ausführungsbeispiele wird die Erfindung nachstehend näher erläutert.

In der Zeichnung zeigen
Fig. 1a den Längsschnitt und
Fig. 1b den Querschnitt eines ersten Ausführungsbeispieles der erfindungsgemäßen Vorrichtung,
Fig. 2a den Längsschnitt und
Fig. 2b den Querschnitt eines zweiten Ausführungsbeispieles dieser Vorrichtung,
Fig. 3a den Längsschnitt und
Fig. 3b den Querschnitt eines ditten Ausführungsbeispieles der erfindungsgemäßen Vorrichtung sowie
Fig. 3c den Querschnitt eines lediglich im Detail etwas abgewandelten weiteren Ausführungsbeispiels.

Die in den Ausführungsbeispielen dargestellten Vorrichtungen zur Erzeugung einer vorzugsweise steuerbaren axialen Gegenkraft an einer durch eine Axialkraft axial verschiebbaren rotierenden Welle 1 besteht im wesentlichen aus einem raumfesten Rastglied 2, welches unter der Wirkung einer auf es einwirkenden, vorzugsweise steuerbaren Radialkraft stiftartig in eine sich axial starr mit der Welle 1 verschiebende radial Vertiefung 3 mit schrägen Flanken 31 eingreift, an denen es bei einer Axialverschiebung der Welle gegen die Wirkung der Radialkraft hinaufgleitet, wobei an der Welle einer der Axialkraft entgegengerichtete axiale Steuer-(Gegen-)Kraft zur Wirkung gebracht wird.

Bei der axial verschiebbaren rotierenden Welle 1 kann es sich beispielsweise um die im Zuge der Lenkwelle einer vollelektrischen Servolenkeinrichtung von Kraftfahrzeugen angeordnete Steuerwelle handeln, deren durch das Lenkmoment bewirkte Axialverschiebung eine ein Servomoment einschleusende Reibungskupplung aussteuert. Durch die über das Rastglied 2 auf die axial verschiebbare rotierende Welle 1 einwirkende Vorrichtung kann auf die Aussteuerung dieser Reibungskupplungen, d. h. auf deren Kennlinienverlauf Einfluß genommen werden. Die Servounterstützung kann also durch entsprechende Steuerung der das Rastglied 2 beaufschagenden Radialkraft in einfacher Weise in Abhängigkeit von beliebigen Betriebsparametern des Fahrzeuges, beispielsweise in Abhängigkeit von der Fahrzeugbeladung, der Fahrgeschwindigkeit, der Quer- und-/oder Längsbeschleunigung etc. gesteuert werden, und zwar sehr zuverlässig und präzise, da die axialen Steuer-(Gegen-)Kräfte sehr präzise und mit geringer Hysterese an der axial verschiebbaren rotierenden Welle 1 zur Wirkung gebracht werden können.

Das von einer nicht weiter dargestellten Kraftquelle radial mit einer steuerbaren Kraft beaufschlagte Rastglied 2 leitet die axiale Steuer-(Gegen-)Kraft nicht wie beim Stand der Technik unmittelbar, sondern über ein auf der Welle 1 befestigtes axialspielfreies Rillenkugellager 4 in die axial verschiebbare rotierende Welle 1 ein, wodurch im Zusammenhang mit der rotatorischen Bewegung der Welle 1 selbst dann, wenn über das Rastglied 2 vergleichsweise hohe Radialkräfte eingeleitet werden, keine nennenswerten Reibungsverluste o. ä. auftreten, da reine Rollreibung vorliegt und sich die Radialkraft auf mehrere der Kugeln 45 aufteilt.

In den dargestellten Ausführungsbeispielen ist die Kugellaufbahn des Rillenkugellagers 4 unmittelbar in die Welle 1 eingearbeitet und mit 41 beziffert; die Welle 1 selbst dient hier also als Lagerinnenring, wodurch sich in radialer Richtung eine recht kompakte Bauweise ergibt.

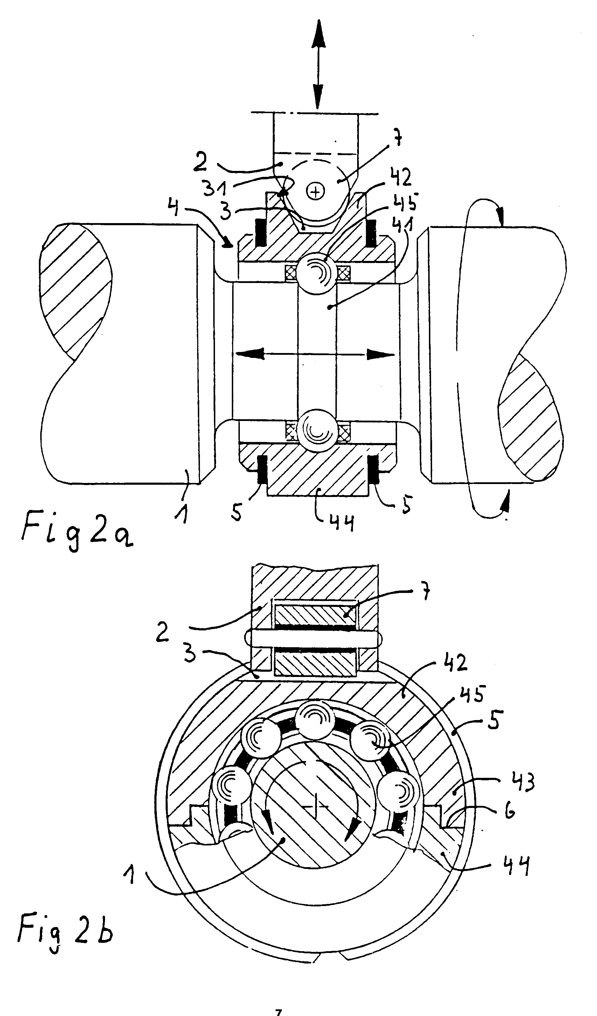

Eine in dieser Hinsicht noch kompaktere Bauweise ergibt sich dann, wenn der Lageraußenring 42 des Rillenkugellagers, wie in den Figuren 2a und 2b dargestellt, als geteilter Außenring ausgebildet wird, dessen beiden Ringteile 43 und 44 durch mindestens ein Spannelement 5, das den Außenumfang der Ringteile zumindest annähernd umschließt, radial zusammengehalten werden.

Die Trennfuge 6 ist dabei so gelegt, daß sie in einer etwa senkrecht zur in das Rastglied 2 eingeleiteten Radialkraft verlaufenden Ebene sowie etwa in Höhe der Wellenmittelachse verläuft. Hierdurch wird sichergestellt, daß die über das Rastglied 2 in den Lageraußenring 42 eingeleitete Radialkraft keine die beiden Ringteile 43, 44 auseinanderdrückende Reaktionskräfte hervorrufen, die von den Spannelementen aufgefangen werden müßten; die vom Rastglied 2 aufgebrachten Radialkräfte werden nämlich nur durch die in der - zeichnerischen - oberen Hälfte der Kugellaufbahn liegenden Kugeln 45 auf die Welle 1 übertragen, die sämtlich oberhalb der Trennfuge 6 liegen.

Durch die Verwendung eines geteilten Lageraußenringes kann die Anordnung bezüglich ihrer radialen Abmessungen noch kompakter gebaut werden, da der Innendurchmesser des Lageraußenringes 42 kleiner als der eigentliche Wellendurchmesser bemessen werden kann.

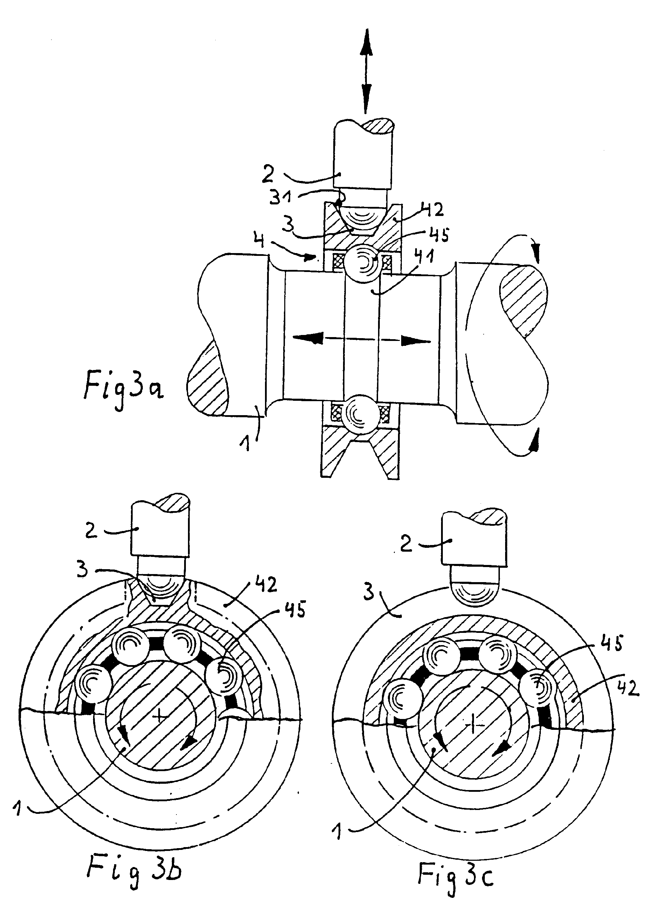

Die sich axial starr mit der Welle 1 verschiebende vorerwähnte radiale Vertiefung 3, in die das Rastglied 2 eingreift und über deren schrägen Flanken 31 die vom Rastglied aufgebrachte Radialkraft entlang dem axialen Verschiebeweg der Welle 1 in eine axiale Steuer-(Gegen-)Kraft umgewandelt wird, ist im Lageraußenring 42 angeordnet. Sie kann entweder als umlaufende Ringnut, wie in Fig. 3c dargestellt, als nur einen Teil des Umfangs des Lageraußenringes tangierende Quernut, wie in Fig. Ib dargestellt, oder in Form einer trichterförmigen Bohrung, wie in Fig. 3b dargestellt, ausgebildet sein.

Im Hinblick auf die rotatorische Bewegung der Welle 1 sind all diese Varianten gleichwertig, denn keine von ihnen übt auf die dabei anfallenden Reibungsverluste o. ä. irgendeinen Einfluß aus.

In den Ausführungsbeispielen der Figuren 3a bis 3c ist das in die als trichterförmige Bohrung bzw. als umlaufende Ringnut ausgebildete radiale Vertiefung 3 eingreifende freie Ende des Rastgliedes 2 wie im Stand der Technik kugelförmig gerundet. Während der axialen Schiebebewegung der Welle 1 tritt daher zwischen der schrägen Flanke 31 der radialen Vertiefung 3 und der auf dieser radial hochgleitenden kugeligen Fläche des freien Endes des Rastgliedes 2 zunächst eine zu überwindende gewisse Haftreibung, danach Gleitreibung auf.

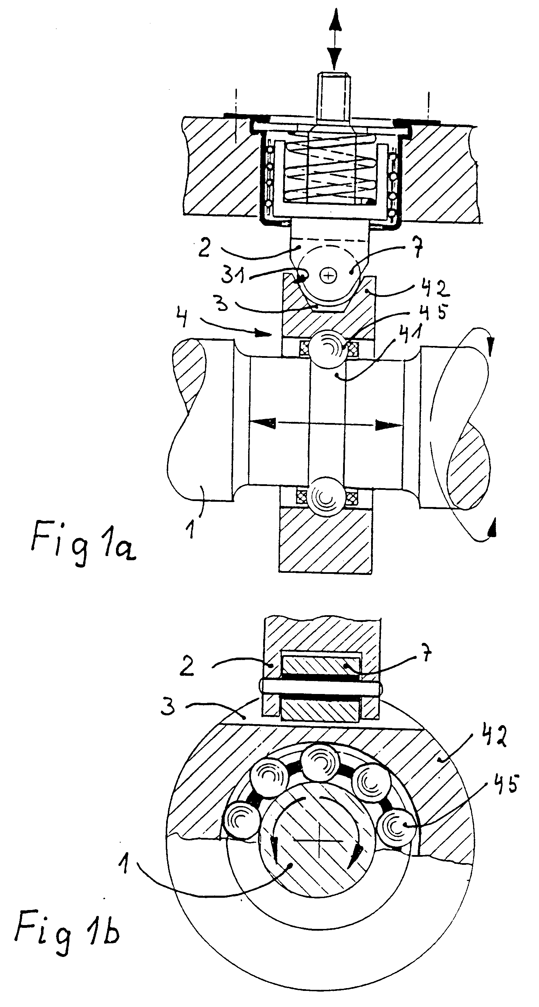

Bessere und präzisere Ergebnisse lassen sich erzielen, wenn entsprechend den Ausführungsbeispielen der Figuren 1 und 2 am freien Ende des Rastgliedes 2 ein quer zur Wellenachse ausgerichteter drehbarer Rollenkörper 7 angeordnet wird, der in die dann als quer zur Wellenachse verlaufende Nut ausgebildete radiale Vertiefung 3 des Lageraußenringes 42 eingreift. Bei dieser Ausbildung wird die bei einer axialen Verschiebebewegung der Welle 1 zwischen dem Rastglied 2 und der mit diesem zusammenwirkenden schrägen Flanke 31 des Lageraußenringes 42 auftretende Reibung auf reine Rollreibung reduziert. Von Vorteil ist weiterhin, daß die hierbei auftretende Flächenpressung zwischen Rollenkörper 7 und Nutflanke 31 trotz u. U. vergleichsweise großer Radialkraft vergleichsweise klein bleibt, weil zwischen Rollenkörper 7 und Nutenflanke 31 Linienberührung besteht.

**Patentansprüche**

1. Vorrichtung zur Erzeugung einer vorzugsweise steuerbaren axialen Gegenkraft an einer durch eine Axialkraft axial verschiebbaren rotierenden Welle (1), enthaltend ein raumfestes Rastglied (2), das stiftartig in eine sich axial starr mit der Welle verschiebende Nut o. ä. mit schrägen Flanken eingreift, an denen es bei einer Axialverschiebung der Welle gegen die Wirkung einer, vorzugsweise steuerbaren, Radialkraft hinaufgleitet, gekennzeichnet durch ein auf der Welle (1) befestigtes axialspielfreies Rillenkugellager (4), dessen Lageraußenring (42) eine radiale Vertiefung (3) mit - auf die Wellenlängsachse bezogen - schrägen Flanken (31) aufweist, in die das freie Ende des radialkraftbeaufschlagten Rastgliedes (2) eingreift.

2. Vorrichtung nach Anspruch 1, dadurch gekennzeichnet, daß das freie Ende des Rastgliedes (2) kugelförmig gerundet ist.

3. Vorrichtung nach Anspruch 1, dadurch gekennzeichnet, daß das freie Ende des Rastgliedes (2) einen quer zur Wellenlängsachse ausgerichteten drehbaren Rollenkörper (7) trägt, der in die als quer zur Wellenlängsachse verlaufende Nut ausgebildete radiale Vertiefung (3) des Lageraußenringes (42) eingreift.

4. Vorrichtung nach einem der Ansprüche 1 bis 3, dadurch gekernzeichnet, daß die Welle (1) selbst als Lagerinnenring des Rillenkugellagers (4) dient und dessen Kugellaufbahn (41) unmittelbar in die Welle (1) eingearbeitet ist.

5. Vorrichtung nach einem der Ansprüche 1 bis 4, gekennzeichnet durch einen geteilten Lageraußenring (42), dessen Trennfuge (6) in einer etwa senkrecht zur Radialkraft verlaufenden Ebene und etwa in Höhe der Wellenmittelachse verläuft, und dessen Ringteile (43, 44) durch mindestens ein seinen Umfang zumindest annähernd umschließendes Spannelement (5) radial zusammengehalten sind.

**Claims**

1. A device for producing a preferably controllable, axial counterforce on a rotating shaft (1) axially displaceable by an axial force, comprising a spatially fixed stop member (2) which engages, in a pinlike manner a groove or the like displaceable axially rigidly with the shaft and which has sloping side walls up which the said stop member slides against the action of a preferably controllable radial force upon axial displacement of the shaft, characterised by a grooved ball bearing (4) which is secured, free from axial play, to the shaft (1) and whose outer race (42) has a radial depression (3) with side walls (31) which slope relative to the longitudinal axis of the shaft and which are engaged by the free end of the stop member (2) under the radial force.

2. A device as claimed in claim 1, characterised in that the free end of the stop member (2) is spherically rounded.

3. A device as claimed in claim 1, characterised in that the free end of the stop member (2) carries a rotatable roller body (7) which is aligned transversely to the longitudinal axis of the shaft and which engages the radial depression (3), in the form of a groove extending transversely to the longitudinal axis of the shaft, of the outer race (42) of the bearing.

4. A device as claimed in one of the claims 1 to 3, characterised in that the shaft (1) itself serves as the inner race of the grooved ball bearing (4), and the raceway (41) of the latter is formed directly in the shaft (1).

5. A device as claimed in one of the claims 1 to 4, characterised by a split outer race (42) whose parting line (6) extends in a plane extending approximately at right angles to the line of the radial force and approximately level with the centre axis of the shaft, and whose race parts (43, 44) are held together radially by at least one clamping element (5) which at least approximately surrounds the circumference of the outer race.

**Revendications**

1. Dispositif pour la génération d'une force axiale antagoniste, réglable de préférence, agissant sur un arbre (1) en rotation, axialement déplaçable par une force axiale, comprenant un élément stationnaire (2) de crantage qui s'engage à la manière d'un doigt dans une rainure ou similaire aux flancs obliques, qui se déplace axialement de façon solidaire avec l'arbre, l'élément de crantage glissant vers le haut le long de ces flancs, contre l'action d'une force radiale, réglable de préférence, lors d'un déplacement axial de l'arbre, caractérisé par un roulement rainuré à billes (4) exempt de jeu axial, fixé sur l'arbre (1), dont la bague extérieure (42) comporte un renfoncement radial (3) aux flancs (31) obliques - par rapport à l'axe longitudinal de l'arbre - dans lequel s'engage l'extrémité libre d'un élément (2) de crantage soumis à une force radiale.

2. Dispositif selon la revendication 1, caractérisé en ce que l'extrémité libre de l'élément (2) de crantage est arrondi de façon sphérique.

3. Dispositif selon la revendication 1, caractérisé en ce que l'extrémité libre de l'élément (2) de crantage porte un corps de galet tournant (7) orienté transversalement à l'axe longitudinal de l'arbre, qui s'engage dans le renfoncement radial (3) de la bague extérieure (42) du roulement, réalisé sous forme d'une rainure s'étendant transversalement à l'axe longitudinal de l'arbre.

4. Dispositif selon l'une des revendications 1 à 3, caractérisé en ce que l'arbre (1) lui-même sert de bague intérieure au roulement rainuré à billes (4), et en ce que le chemin (41) de roulement des billes est réalisé directement dans l'arbre (1).

5. Dispositif selon l'une des revendications 1 à 4, caractérisé par une bague de roulement extérieure divisée (42), dont la jonction (6) s'étend dans un plan à peu près perpendiculaire à la force radiale et à peu près au niveau de l'axe central de l'arbre, et dont les deux bagues partielles (43, 44) sont maintenues ensemble par au moins un élément (5) de serrage entourant au moins à peu près la circonférence de celles-ci.

Fig 1a

Fig 1b

Fig 2a

Fig 2b

Fig 3a

Fig 3b

Fig 3c